Europäisches Patentamt

European Patent Office

Office européen des brevets

(19)

(11) **EP 0 465 349 B1**

(12) **FASCICULE DE BREVET EUROPEEN**

(45) Date de publication et mention
de la délivrance du brevet:
**06.03.1996 Bulletin 1996/10**

(51) Int Cl.[6]: **H04N 5/202**

(21) Numéro de dépôt: **91401820.5**

(22) Date de dépôt: **02.07.1991**

(54) **Dispositif de correction de Gamma sur signal vidéo analogique**

Vorrichtung zur Gammakorrektur eines analogen Videosignals

Device for gamma correcting an analog video signal

(84) Etats contractants désignés:
**DE GB**

(30) Priorité: **06.07.1990 FR 9008618**

(43) Date de publication de la demande:
**08.01.1992 Bulletin 1992/02**

(73) Titulaires:
- **FRANCE TELECOM**
  **F-92131 Issy les Moulineaux (FR)**
- **TELEDIFFUSION DE FRANCE S.A.**
  **F-92542 Montrouge Cédex (FR)**

(72) Inventeur: **Rivière, Marc**
**F-35340 Liffre (FR)**

(74) Mandataire: **Plaçais, Jean-Yves et al**
**Cabinet Netter,**
**40, rue Vignon**
**F-75009 Paris (FR)**

(56) Documents cités:
**EP-A- 0 116 398**     **DE-A- 3 341 667**
**US-A- 4 829 381**

## Description

L'invention concerne la correction de Gamma sur signal vidéo.

On sait que la luminosité d'un point image sur un tube cathodique n'est pas proportionnelle à la tension appliquée au tube au même moment. C'est au contraire une fonction puissance de cette même tension. Et il est classique d'appeler "Gamma" la valeur de l'exposant de cette fonction puissance.

Différents facteurs font que la valeur de Gamma peut aller de un peu plus de 0 à environ 5. Mais il s'agit là d'un choix, cette valeur demeurant constante pour un appareil donné.

La présente invention concerne plus particulièrement les dispositif de correction de Gamma sur signal vidéo, du type comprenant :

- un sommateur analogique délivrant un signal somme à des moyens d'amplification exponentielle propres à fournir un signal corrigé,
- une voie vidéo comportant une première entrée analogique de signal vidéo, alimentant de premiers moyens d'amplification logarithmique connectés à une première entrée du sommateur analogique, et
- une voie de référence comportant une seconde entrée, recevant une tension continue de référence, et une sortie connectée à une seconde entrée du sommateur analogique.

Un dispositif de ce type est enseigné par exemple par la publication US-A-4 829 381.

Les dispositifs de correction de Gamma proposés actuellement ne donnent pas entière satisfaction. Soit ils sont excessivement complexes et onéreux, comme notamment le dispositif précité, soit ils s'avèrent inaptes à fonctionner avec la télévision du futur, c'est-à-dire en définition plus élevée qu'actuellement.

L'invention a pour but d'apporter une solution à ce problème, en fournissant notamment un correcteur de Gamma qui fonctionne sur signaux analogiques, en haute performance, c'est-à-dire y compris pour la télévision haute définition, et ce à des conditions de complexité et de coût raisonnables.

Un autre but de l'invention est de fournir un circuit qui permette de traiter à la fois les valeurs de Gamma supérieures à 1 et celles qui sont inférieures à ce seuil.

L'invention a aussi pour but de fournir un correcteur de Gamma programmable de façon continue ou par bonds, dans un intervalle allant pratiquement d'environ 0,2 jusqu'à 5 environ, et ce en conservant d'excellentes performances.

L'invention propose à cet effet un dispositif du type défini en introduction, dans lequel :

- les moyens d'amplification exponentielle comprennent un amplificateur exponentiel à large bande,

- la voie de référence comporte de seconds moyens d'amplification logarithmique alimentés par la tension continue de référence et connectés à la seconde entrée du sommateur analogique pondéré,

- les deux moyens d'amplification logarithmique comprennent chacun un amplificateur logarithmique à large bande, les deux amplificateurs logarithmiques ayant les mêmes constantes caractéristiques que l'amplificateur exponentiel, et

- le sommateur analogique est propre à effectuer la sommation des sorties des deux voies pondéré respectivement avec un gain Gamma pour la voie vidéo, et un gain Un moins Gamma pour la voie de référence.

Ainsi, à l'aide deux voies parallèles à amplification logarithmique, d'un sommateur analogique pondéré incluant des moyens pour générer des gains Gammas et UN moins Gamma respectivement sur la voie vidéo et la voie de référence, et des moyens d'amplification exponentielle, on réalise un dispositif de correction de Gamma particulièrement simple et propre à fonctionner dans des téléviseurs à haute définition.

Dans un mode de réalisation intéressant, les deux amplificateurs logarithmiques à large bande et l'amplificateur exponentiel sont réalisés à l'aide de transistors UHF couplés thermiquement, associés à chaque fois à un amplificateur opérationnel. Il est envisageable de remplacer les transistors UHF par des transistors SHF pour de meilleures performances.

Selon un autre aspect important de l'invention, les gains du sommateur analogique pondéré sont conjointement ajustables, pour ajuster en même temps le coefficient Gamma.

De façon particulièrement avantageuse, le sommateur analogique pondéré comporte des gains ajustables par résistances pour des valeurs de Gamma comprises entre 0,2 et 5 environ.

Ainsi, en utilisant des résistances variables en sortie des voies, on peut facilement modifier les gains selon les besoins.

Par ailleurs, par des commutations, le sommateur analogique pondéré peut passer d'une manière simple du Gamma inférieur à 1 au Gamma supérieur à 1.

Dans un mode de réalisation préférentiel, le sommateur analogique pondéré comprend de première et seconde résistances dont l'une des extrémité est respectivement connectée à la sortie des voies vidéo et de référence, un additionneur analogique comprenant deux entrées et une sortie connectée aux moyens d'amplification exponentielle, et deux commutateurs propres, dans un premier état, à connecter la première entrée de l'additionneur analogique aux extrémités des résistances lesquelles sont opposées aux extrémités connectées respectivement à la voie vidéo et à la voie de référence et à déconnecter sa seconde entrée, et dans un second état, à connecter la première entrée de cet additionneur analogique à l'extrémité de la première résistance qui est connectée à la sortie de la voie vidéo, et à connecter sa seconde sortie à l'extrémité de la seconde résistance, laquelle est opposée à l'extrémité connectée à la sortie de la voie de référence.

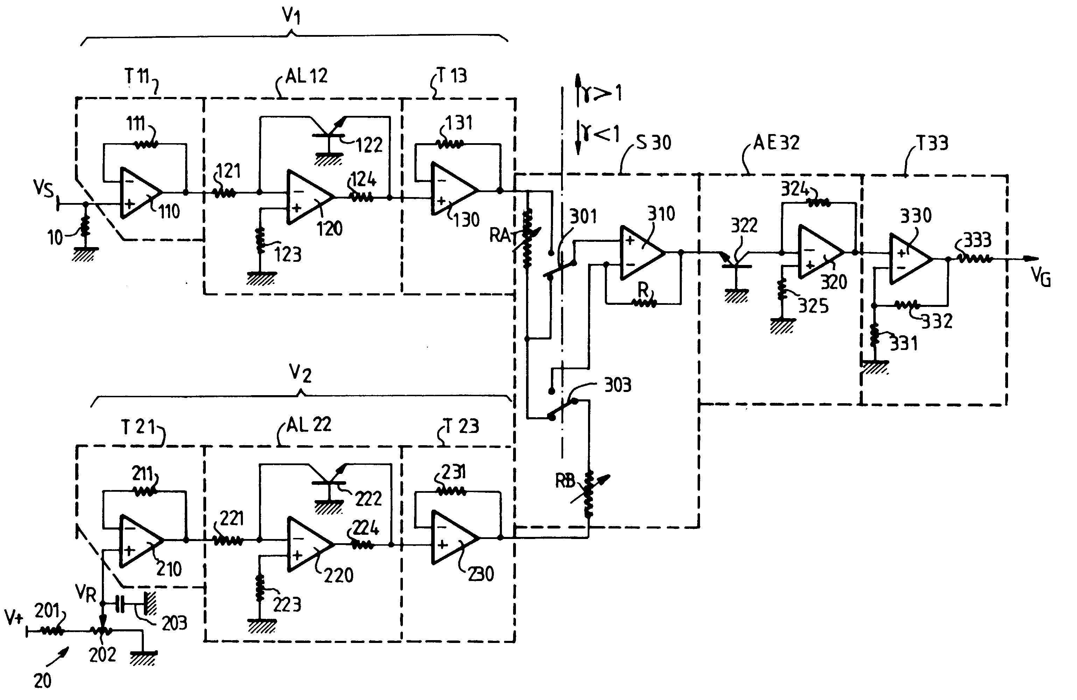

D'autres caractéristiques et avantages de l'invention apparaîtront à l'examen de la description détaillée ci-après, et des dessins annexés, dont la figure unique illustre le schéma détaillé d'un mode de réalisation du dispositif selon l'invention.

Le dessin comporte pour l'essentiel des éléments de caractère certain. Il fait donc partie intégrante de la description, et pourra servir non seulement à mieux faire comprendre celle-ci, mais aussi à définir l'invention, le cas échéant.

Un signal vidéo analogique est appliqué à l'entrée Vs, aux bornes d'une résistance de charge 10. Ce signal est appliqué à un étage tampon d'entrée T11, constitué d'un amplificateur opérationnel 110 avec résistance de contre-réaction 111. La sortie de celui-ci est appliquée à un premier amplificateur logarithmique AL12, constitué d'une résistance d'entrée 121, vers l'entrée inverseuse d'un amplificateur opérationnel 120, dont la sortie appliquée à une résistance 124 est bouclée ensuite par la maille émetteur-collecteur d'un transistor 122 vers l'entrée inverseuse. La base du transistor 122 est à la masse. De son côté, l'entrée non-inverseuse de l'amplificateur 120 est reliée à la masse par une résistance 123.

Ce montage confère à l'amplificateur 120 des caractéristiques logarithmiques, en raison de la courbe de réponse du transistor 122 tel que monté.

La sortie de l'étage AL12 est appliquée à un autre tampon T13 constitué comme le précédent d'un amplificateur opérationnel 130 et d'une résistance de contre-réaction 131.

L'ensemble T11, AL12 et T13 constitue une première voie ou voie de signal vidéo $V_1$.

Au bas de la figure, la tension de référence. positive V+ est appliquée à deux résistances en série 201 et 202, la seconde potentiométrique, l'ensemble formant une source de tension continue ajustable Vr, filtrée par capacité 203.

La tension Vr est appliquée à l'entrée non-inverseuse d'un amplificateur 210 muni d'une résistance de contre-réaction 211, et formant un tampon 21 semblable au tampon 11. Il vient ensuite un amplificateur AL22 constitué exactement comme l'amplificateur AL12 (les références des éléments identiques sont simplement augmentées de 100). Après cela, un autre tampon T23 intervient, qui est semblable au tampon T13. L'ensemble forme la voie de référence $V_2$.

Les sorties des tampons T13 et T23 sont appliquées à un sommateur analogique pondéré S30, que l'on décrira maintenant.

Les entrées de ce sommateur S30 sont les deux sorties des tampons T13 et T23. Le sommateur S30 lui-même est articulé autour d'un amplificateur opérationnel 310, comportant donc un circuit pour son entrée inverseuse et un circuit pour son entrée non-inverseuse. Les commutations sont avantageusement réalisées par des contacts 301 et 303 couplés.

Dans la position illustrée, on suppose que l'on traite un Gamma inférieur à 1.

Les deux entrées sont respectivement connectées à des résistances ajustables RA et RB, dont le point milieu vient à travers le contact 301 sur l'entrée non-inverseuse de l'amplificateur 310. Son autre entrée est simplement reliée à la résistance de contre-réaction fixe R.

Dans ces conditions, le coefficient Gamma est égal à RB/(RA+RB).

L'homme de l'art comprendra qu'il en résulte un gain de Gamma pour les signaux issus de la voie $V_1$ et un gain de Un moins Gamma pour les signaux issus de la voie $V_2$.

Lorsqu'on souhaite traiter des valeurs de Gamma supérieures à 1, les contacts 301 et 303 basculent dans l'autre position. Dans ce cas, la sortie de la voie $V_1$ est directement connectée à l'entrée non-inverseuse de l'amplificateur 310.

La sortie de la voie $V_2$ est connectée à deux résistances ajustables en série RB et R dont le point milieu vient sur l'entrée inverseuse du même amplificateur. La résistance RA est inutilisée.

Dans ce cas, la valeur de Gamma est 1 + R/RB.

Et là encore, on obtient un gain de Gamma pour la voie $V_1$ et un gain de Un moins Gamma pour la voie $V_2$.

La sortie du sommateur S30 est appliquée à un amplificateur exponentiel AE32. Celui-ci commence par un transistor 322 monté comme les transistors 122 et 222, mais en série devant l'entrée inverseuse de l'amplificateur 320. Celui-ci est muni d'une résistance de contre-réaction 324, et d'une résistance vers son entrée non-inverseuse 325.

Par ce montage, on obtient exactement l'effet inverse de celui qui se manifeste dans les amplificateurs logarithmiques, où le transistor était monté dans la contre-réaction. En le montant devant l'une des entrées, on réalise directement la fonction réciproque, c'est-à-dire la fonction exponentielle correspondante, sous réserve d'un choix convenable des résistances accompagnantes.

La sortie de l'étage AE32 est appliquée à un tampon de sortie T33, muni de deux résistances 332 et 331 qui en fixent le gain par contre-réaction, et d'une résistance de sortie 333.

Il est maintenant fait référence aux formules données en annexe.

Les formules (I) donnent les signaux $v_1$ et $v_2$ des deux voies d'entrée, respectivement pour le signal vidéo $v_s$ et la tension de référence $v_r$.

La formule (II) donne la réponse $v_4$ de l'amplificateur exponentiel pour un signal d'entrée $v_3$.

Les formules (III) et (IV) rappellent les expressions de gamma et (1 moins gamma) pour gamma inférieur et supérieur à 1, respectivement.

L'homme de l'art comprendra que, dans les deux cas, on obtient en sortie un signal de la forme définie par la relation (V).

Tous les amplificateurs opérationnels peuvent être du même modèle CLC400, fabriqué par la Société COMLINEAR.

Les transistors 122, 222 et 322 sont par exemple trois des cinq transistors que comprend le module du circuit intégré CA3127 fabriqué par la Société RTC (La Radiotechnique).

Les résistances 10 et 333 valent en principe 75 ohms, ou toute autre valeur adaptée aux impédances de charge habituelles.

Toutes les autres résistances valent 270 ohms, sauf les résistances 123, 223 et 325, qui en valent 470.

Les résistances RA, RB et l'amplificateur 310 peuvent être interconnectés par câblage dans la configuration désirée, ou, éventuellement, par l'intermédiaire d'un commutateur trois circuits, deux positions, de hautes performances.

Ces résistances possèdent une valeur totale d'environ 270 ohms chacune. Elles peuvent être ajustées en mode potentiométrique, ou simplement par commutation pas à pas sur une résistance à plot.

Des tests effectués sur le circuit qui vient d'être décrit, pour des valeurs de Gamma égales à 0,46 et 2,1, ont montré une bande passante stable jusqu'à 60 Megahertz (écart inférieur à 1 décibel).

Le dispositif s'est avéré posséder des caractéristiques de retard tout à fait satisfaisantes, ainsi qu'une excellente stabilité en température, notamment sur la gamme usuelle de 10°C à 60°C, des températures régnant dans les dispositifs de télévision.

La correction effectuée selon l'invention peut s'exprimer comme le produit de la tension de référence Vr portée à la puissance Un moins Gamma par le signal analogique Vs porté à la puissance Gamma.

En pratique, les expérimentations conduites ont montré qu'il est bon d'y ajouter un terme de décalage, sensible à différents paramètres, dont en particulier la température.

On obtient alors une meilleure précision sur la valeur de Gamma pour les dispositifs de télévision.

Bien entendu, le montage selon l'invention n'est pas limité au mode de réalisation décrit.

On peut notamment utiliser plusieurs transistors pour réaliser les amplificateurs linéaires et logarithmiques.

Il est important de choisir des transistors ayant un grand couplage thermique et un couplage électrique aussi faible que possible, en même temps qu'une fréquence de transition élevée.

Le circuit de l'invention peut être réalisé avantageusement sous forme intégrée, avec des sorties pour le câblage ou les commutations des éléments 301 et 303. On assure ainsi les mêmes performances pour les valeurs de gamma supérieures et inférieures à 1, qui correspondent à des dispositifs complémentaires : correction à la prise de vues et correction à la visualisation, par exemple.

Par ailleurs, l'invention définit un correcteur non-linéaire analogique en large bande qui peut éventuellement avoir d'autres applications que pour la correction de Gamma en télévision, si celles-ci utilisent une fonction puissance.

ANNEXE - FORMULES

$$(\text{I}) \quad \left\{ \begin{array}{l} v_1 = -\ K\ \text{Log}\ (v_s/V_0) \\[2mm] v_2 = -\ K\ \text{Log}\ (v_r/V_0) \end{array} \right.$$

$$(\text{II}) \qquad v_4 = V_0\ \exp\ (-v_3/K)$$

$$(III) \begin{cases} \gamma > 1 \\ \gamma = \dfrac{RB+R}{RB} \\ 1 - \gamma = -\dfrac{R}{RB} \end{cases}$$

$$(IV) \begin{cases} \gamma < 1 \\ \gamma = \dfrac{RB}{RA+RB} \\ 1 - \gamma = \dfrac{RA}{RA+RB} \end{cases}$$

$$(V) \qquad V_G = v_r^{1-\gamma} \cdot v_s^{\gamma}$$

**Revendications**

1. Dispositif de correction de Gamma sur signal vidéo, du type comprenant:

   - un sommateur analogique (S30) délivrant un signal somme à des moyens d'amplification exponentielle (AE32) propres à fournir un signal corrigé (VG),
   - une voie vidéo ($V_1$) comportant une première entrée analogique (Vs) de signal vidéo, alimentant de premiers moyens d'amplification logarithmique (AL12, T13) connectés à une première entrée du sommateur analogique (S30), et
   - une voie de référence ($V_2$) comportant une seconde entrée (VR), recevant une tension continue de référence, et une sortie connectée à une seconde entrée du sommateur analogique (S30),

   caractérisé en ce que les moyens d'amplification exponentielle comprennent un amplificateur exponentiel à large bande (AE32),

   en ce que la voie de référence ($V_2$) comporte de seconds moyens d'amplification logarithmique (AL22, T23) alimentés par la tension continue de référence et connectés à la seconde entrée du sommateur analogique pondéré (S30),

   en ce que les deux moyens d'amplification logarithmique comprennent chacun un amplificateur logarithmique à large bande (AL12, AL22), les deux amplificateurs logarithmiques ayant les mêmes constantes caractéristiques (K, $V_0$) que l'amplificateur exponentiel (AE32), et

   en ce que le sommateur analogique (S30) est propre à effectuer la sommation des sorties des deux voies ($V_2$, $V_1$) pondéré respectivement avec un gain Gamma pour la voie vidéo, et un gain Un moins Gamma pour la voie de référence.

2. Dispositif selon la revendication 1, caractérisé en ce que les deux amplificateurs logarithmiques à large bande (AL12,AL22) et l'amplificateur exponentiel ( AE32) sont réalisés à l'aide de transistors UHF couplés thermiquement, associés à chaque fois à un amplificateur opérationnel.

3. Dispositif selon la revendication 1, caractérisé en ce que les deux amplificateurs logarithmiques à large bande (AL12, AL22) et l'amplificateur exponentiel (AE32) sont réalisés à l'aide de transistors SHF couplés thermiquement, associés à chaque fois à un amplificateur opérationnel.

**4.** Dispositif selon l'une des revendications 1 à 3, caractérisé en ce que les gains du sommateur analogique pondéré (S30) sont conjointement ajustables.

**5.** Dispositif selon l'une des revendications 1 à 4, caractérisé en ce que le sommateur analogique pondéré (S30) comporte des gains ajustables par résistances pour des valeurs de Gamma comprises entre 0,2 et 5 environ.

**6.** Dispositif selon l'une des revendications 1 à 5, caractérisé en ce que le sommateur analogique pondéré (S30) comporte des commutations (301, 303) pour passer des Gammas inférieurs à 1 aux Gammas supérieurs à 1.

**7.** Dispositif selon l'une des revendications 1 à 6, caractérisé en ce que le sommateur analogique pondéré (S30) comprend de première et seconde résistances (RA, RB) dont l'une des extrémité est respectivement connectée à la sortie des voies vidéo (V1) et de référence (V2), un additionneur analogique (310, R) comprenant deux entrées et une sortie connectée aux moyens d'amplification exponentielle (AE32), et deux commutateurs (301, 303) propres, dans un premier état, à connecter la première entrée de l'additionneur analogique (310, R) aux extrémités des résistances (RA, RB) lesquelles sont opposées aux extrémités connectées respectivement à la voie vidéo et à la voie de référence et à déconnecter sa seconde entrée, et dans un second état, à connecter la première entrée de cet additionneur analogique (310, R) à l'extrémité de la première résistance (RA) qui est connectée à la sortie de la voie vidéo (V1), et à connecter sa seconde entrée à l'extrémité de la seconde résistance (RB), laquelle est opposée à l'extrémité connectée à la sortie de la voie de référence (V2).

## Patentansprüche

**1.** Vorrichtung zur Gamma-Korrektur eines Videosignals mit:

- einem Analogsummierer (S30), der ein Summensignal an zur Bildung eines korrigierten Signals (VG) geeignete Einrichtungen zur Exponentialverstärkung (AE32) liefert,
- einem Videokanal ($V_1$) mit einem ersten Video-signal-Analogeingang (Vs), welcher erste Einrichtungen zur logarithmischen Verstärkung (AL12, T13) versorgt, die mit einem ersten Eingang des Analogsummierers (S30) verbunden sind, und
- einem Referenzkanal ($V_2$) mit einem zweiten Eingang (VR), der eine Referenzgleichspannung empfängt, und einem mit einem zweiten Eingang des Analogsummierers (S30) verbundenen Ausgang,

dadurch gekennzeichnet, daß die Einrichtungen zur Exponentialverstärkung einen Exponentialverstärker großer Bandbreite (AE32) aufweisen,

daß der Referenzkanal ($V_2$) zweite Einrichtungen zur logarithmischen Verstärkung (AL22, T23) aufweist, die durch die Referenzgleichspannung versorgt werden und mit dem zweiten Eingang des gewichteten Analogsummierers (S30) verbunden sind,

daß die beiden Einrichtungen zur logarithmischen Verstärkung jeweils einen logarithmischen Verstärker großer Bandbreite (AL12, AL22) aufweisen, wobei die beiden logarithmischen Verstärker die gleichen spezifischen Konstanten ($K$, $V_0$) wie der Exponentialverstärker (AE32) aufweisen, und

daß sich der Analogsummierer (S30) dazu eignet, die Summe der Ausgänge der beiden Kanäle ($V_2$, $V_1$) jeweils gewichtet mit einem Verstärkungsfaktor Gamma ($\gamma$) für den Videokanal und einem Verstärkungsfaktor EINS minus Gamma ($1 - \gamma$) für den Referenzkanal zu bilden.

**2.** Vorrichtung nach Anspruch 1, dadurch gekennzeichnet, daß die beiden logarithmischen Verstärker großer Bandbreite (AL12, AL22) und der Exponentialverstärker (AE32) mittels thermisch gekoppelter UHF-Transistoren gebildet sind, die jeweils mit einem Operationsverstärker verbunden sind.

**3.** Vorrichtung nach Anspruch 1, dadurch gekennzeichnet, daß die beiden logarithmischen Verstärker großer Bandbreite (AL12, AL22) und der Exponentialverstärker (AE32) mittels thermisch gekoppelter SHF-Transistoren gebildet sind, die jeweils mit einem Operationsverstärker verbunden sind.

**4.** Vorrichtung nach einem der Ansprüche 1-3, dadurch gekennzeichnet, daß die Verstärkungsfaktoren des gewichteten Analogsummierers (S30) gemeinsam einstellbar sind.

**5.** Vorrichtung nach einem der Ansprüche 1-4, dadurch gekennzeichnet, daß der gewichtete Analogsummierer (S30) für Gamma-Werte zwischen 0,2 bis etwa 5 durch Widerstände einstellbare Verstärkungsfaktoren aufweist.

**6.** Vorrichtung nach einem der Ansprüche 1-5, dadurch gekennzeichnet, daß der gewichtete Analogsummierer (S30) Schaltglieder (301, 303) aufweist, um von Gamma kleiner 1 ($\gamma < 1$) zu Gamma größer 1 ($\gamma > 1$) überzugehen.

**7.** Vorrichtung nach einem der Ansprüche 1-6, dadurch gekennzeichnet, daß der gewichtete Analogsummierer (S30) erste und zweite Widerstände (RA, RB), deren eines Ende jeweils mit dem Ausgang des Video-(V1) und Referenzkanals (V2) verbunden ist, einen Analogaddierer (310, R), der zwei Eingänge und einen mit den Einrichtungen zur Exponentialverstärkung (AE32) verbundenen Ausgang aufweist, und zwei geeignete Schaltglieder (301, 303) aufweist, in einem ersten Zustand, um den ersten Eingang des Analogaddierers (310, R) mit den Enden der Widerstände (RA, RB) zu verbinden, die den jeweils mit dem Videokanal und dem Referenzkanal verbundenen Enden gegenüberliegen, und um seinen zweiten Eingang zu trennen, und in einem zweiten Zustand, um den ersten Eingang dieses Analogaddierers (310, R) mit dem Ende des ersten Widerstandes (RA) zu verbinden, das mit dem Ausgang des Videokanals (V1) verbunden ist, und um seinen zweiten Eingang mit dem Ende des zweiten Widerstandes (RB) zu verbinden, das dem mit dem Ausgang des Referenzkanals (V2) verbundenen Ende gegenüberliegt.

## Claims

**1.** A video signal gamma correction device of the type comprising:

- an analogue summing circuit (S30) supplying a summed signal to the exponential amplifying means (AE32), suitable for providing a corrected signal (VG);
- a video path ($V_1$) comprising a first video signal analogue input (Vs), supplying first logarithmic amplifying means (AL12, T13) connected to a first inlet of the analogue summing circuit (S30); and
- a reference path ($V_2$) comprising a second input (VR) receiving a continuous reference voltage, and an output connected to a second input of the analogue summing circuit (S30),

characterised in that the exponential amplifying means comprise a wide band logarithmic amplifier (AE32); and in that the reference path ($V_2$) comprises second logarithmic amplifying means (AL22, T23) supplied with the continuous reference voltage and connected to the second input of the weighted analogue summing circuit (S30);
in that the two logarithmic amplifying means each comprise a wide band logarithmic amplifier (AL12, AL22), the two logarithmic amplifiers having the same characteristic constants (K, $V_0$) as the exponential amplifier (AE32); and
in that the analogue summing circuit (S30) is suitable for performing the summing of the outputs of the two paths ($V_2$, $V_1$) weighted, respectively, with a gain of gamma for the video path and a gain of one minus gamma for the reference path.

**2.** Device according to Claim 1, characterised in that the two wide band logarithmic amplifiers (AL12, AL22) and the exponential amplifier (AE32) are made using UHF transistors which are thermally coupled together and each of which is associated with an operational amplifier.

**3.** Device according to Claim 1, characterised in that the two wide band logarithmic amplifiers (AL12, AL22) and the exponential amplifier (AE32) are made using SHF transistors which are thermally coupled together and each of which is associated with an operational amplifier.

**4.** Device according to any one of Claims 1 to 3, characterised in that the gains of the weighted analogue summing circuit (S30) are jointly adjustable.

**5.** Device according to any one of Claims 1 to 4, characterised in that the weighted analogue summing circuit (S30) has a gain which is adjustable by means of resistances to accommodate gamma values between approximately 0.2 and 5.

**6.** Device according to any one of Claims 1 to 5, characterised in that the weighted analogue summing circuit (S30) comprises switching means (301, 302) for switching from values of gamma which are less than 1 to values of gamma which are greater than 1.

7. Device according to any one of Claims 1 to 6, characterised in that the weighted analogue summing circuit (S30) comprises first and second resistors (RA, RB), one of the ends of which is connected, respectively, to the output of the video path (V1) and of the reference path (V2), an analogue adder (310, R), comprising two inputs and an output connected to exponential amplifying means (AE32) and two switching means (301, 303) suitable, in a first stage, for connecting the first input of the analogue adder (310, R), to the ends of the resistors (RA, RB), which are opposite the ends which are connected, respectively, to the video path and to the reference path, and for disconnecting the second input, thereof, and, in a second state, for connecting the first input of this analogue adder (310, R) to the end of the first resistor (RA) which is connected to the output of the video path (V1), and for connecting the second input to the end of the second resistor (RB), which is opposite the end connected to the output of the reference path (V2).